Europäisches Patentamt

**European Patent Office**

Office européen des brevets

(19)

(11) Publication number: **0 123 510**
**B1**

(12) **EUROPEAN PATENT SPECIFICATION**

(45) Date of publication of patent specification: **29.07.87**

(51) Int. Cl.⁴: **C 08 F 10/00, C 08 F 4/62**

(21) Application number: **84302635.2**

(22) Date of filing: **18.04.84**

(54) **Preparation of olefin polymerization catalysts and their use.**

(30) Priority: **21.04.83 US 487454**

(43) Date of publication of application:
**31.10.84 Bulletin 84/44**

(45) Publication of the grant of the patent:
**29.07.87 Bulletin 87/31**

(84) Designated Contracting States:
**BE DE FR GB IT NL**

(56) References cited:
**BE-A- 886 427**

The file contains technical information
submitted after the application was filed and
not included in this specification

(73) Proprietor: **CHEMPLEX COMPANY**
**3100 Golf Road**
**Rolling Meadows Illinois 60008 (US)**

(72) Inventor: **Pullukat, Thomas Joseph**
**710 Charleston Lane**
**Hoffman Estates, IL 60172 (US)**
Inventor: **Hwang, Yu-Tang**
**1520 Ninth Street, N.W.**
**Clinton, IA 52732 (US)**
Inventor: **Dombro, Robert Alexander**
**857 N. Marsha Drive**
**Palatine, IL 60067 (US)**

(74) Representative: **Spencer, Graham Easdale et al**
**A.A. Thornton & CO Northumberland House**
**303-306, High Holborn**
**London WC1V 7LE (GB)**

EP 0 123 510 B1

# 0 123 510

**Description**

The present invention is concerned with the preparation of solid catalysts for use with an alkyl or aryl aluminium compound cocatalyst in the polymerization and copolymerization of 1-olefins, with the catalysts so obtained, and with their use for the polymerization and copolymerization of 1-olefins.

The rapid and economical polymerization and copolymerization of 1-olefins with a catalyst was primarily initiated by K. Ziegler who developed two component catalyst systems based on compounds of Group IV—VIB metals of the periodic table and an organometallic compound of Groups I—IIIA of the periodic table. Since this discovery, numerous catalysts have been developed as improvements over the original Ziegler catalysts.

One such improvement is described in British Patent Specification 2068007 (corresponding to Belgian Patent 886427); this specification describes a method of preparing a solid olefin polymerisation catalyst which is active in the presence of an alkyl- or aryl-aluminium co-catalyst, which comprises:

(a) reacting a monofunctional organic silicon compound with silica and/or alumina,

(b) optionally, reacting the product of step (a) with at least one halide and/or alkoxide of a Group IVB or VB metal,

(c) reacting the product of the preceding step with a complex or organometallic compound of a Group IIA metal, and

(d) when step (b) is omitted, reacting the product of step (c) with at least one halide and/or alkoxide of a Group IVB or VB metal.

We have now found that by (i) first removing surface absorbed water from the silica and/or alumina support material, (ii) ensuring that there is an excess of the organosilicon compound used in step (a), the excess being with respect to the amount of organosilicon compound required to react with the surface hydroxyl groups present in the support material, and (c) ensuring that the reaction with the Group IVB or VB transition metal compound is carried out last, improved olefin polymerisation catalysts are obtained. In particular, the polymerisation catalysts so obtained give lower molecular weight polymers and polymers with a narrower molecular weight distribution.

According to the present invention, there is provided a method of making a solid catalyst for use with an alkyl or aryl aluminium compound cocatalyst in the polymerization and copolymerization of 1-olefins, which comprises:

A) removing surface absorbed water from a support material which is silica and/or alumina having surface hydroxyl groups by

(i) drying or calcining the support at an elevated temperature, or

(ii) reacting the support with an organosilicon compound and removing any excess of said organosilicon compound and reaction by-products,

B) reacting the treated support with

(i) an organosilicon compound which is reactive with the surface hydroxyl groups and which has the formula $(R_3Si)_2NH$, in which the R groups, which may be the same or different, are $C_1$—$C_{20}$ alkyl, aryl, alkaryl or aralkyl groups, the amount of the organosilicon compound being in excess of that required to react with the surface hydroxyl groups present in the support, and

(ii) a Group IIA organometallic compound or a complex of a Group IIA organometallic compound with a Group IIIA organometallic compound, and

C) reacting the product obtained from step B) with at least one compound of a Group IVB or Group VB transition metal.

The present invention also comprises catalysts made by the method according to the invention, and a method of making polymers which comprises polymerizing one or more 1-olefins under polymerizing conditions in the presence of a catalyst according to the invention and an alkyl or aryl aluminium compound cocatalyst.

The polymers obtained with catalysts according to the invention are particularly suitable for use in the production of blown films; ethylene-α-olefin copolymers of the so-called linear low density polyethylene type (LLDPE) are of particular interest for this purpose.

The catalysts also can be used to produce polymers with higher melt indexes than can be obtained with prior art catalysts. Polymers with a high melt index and narrow molecular weight distribution permit the production of exceptionally tough and stiff products with fast production cycles.

The catalysts are suitable for gas phase, particle form, solution form, or high pressure low density processess. The polymers obtained with these catalysts do not need a post reaction step to remove the catalyst residues, although such may be done if desired. In a particle form process, the polymers are particulate in nature and do not show fouling tendencies as compared with those obtained with prior art catalysts.

The catalysts of this invention are highly active and are suitable for the polymerization of ethylene alone and the copolymerization of ethylene with one or more 1-olefins having 3—8 carbon atoms to form

2

polymers of low, medium and high densities. These catalysts are especially effective in the production of high and low density polyethylene having a narrow molecular weight distribution and high melt index.

The melt index of the polyethylene produced by the catalysts of this invention can be controlled by methods known in the art, such as increasing the temperature of polymerization or by the addition of hydrogen.

The support material used to make the catalyst consists of silica or alumina or a mixture of the two. The support is preferably finely divided and porous. It may contain minor amounts of zirconia, magnesia or titania, such as a zirconia-silica cogel or a zirconia-titania-silico tergel. The preferred support is silica.

As indicated, the support is pre-treated to remove surface absorbed water either by drying or calcining at an elevated temperature, which is preferably from 200° to 1000°C, or by reaction with an organosilicon compound. Preferred organosilicon compounds for this purpose are those of the formulae $(R_3Si)_2NH$ and $R_nSiX_{4-n}$, where n is 1, 2 or 3, X is a group which is chemically reactive with hydroxyl groups, preferably halogen, and R is hydrogen and/or a hydrocarbyl group, preferably a $C_1—C_{20}$ alkyl, aryl, alkaryl, or aralkyl group. Suitable compounds are, for example, trimethylchlorosilane and hexamethyldisilazane.

The reaction with the organosilicon compound may be carried out in any convenient way, for example, in solution, direct reaction with the support or under vapour phase conditions. The amount of organosilicon compound used should be sufficient to react with the surface absorbed water of the support starting material and may, optionally, be sufficient to react with the hydroxyl groups of the support. Any excess of the organosilicon compound used and any reaction products, should be removed from the treated support before the latter is submitted to the further reactions of the method according to the invention.

The reactions of step B) of the method are preferably carried out in an inert liquid medium, the latter preferably being a liquid hydrocarbon, more particularly a straight or branched chain $C_3—C_8$ liquid alkane, such as propane, isobutane or mixed branch hydrocarbons such as are available as Isopar® H.

The treated support is reacted, in step B), with an organosilicon compound of formula $(R_3Si)_2NH$ as above defined. Suitable compounds of this formula are, for example, hexamethyldisilazane, hexaphenyl-disilazane, and trimethyltriethyl disilazane.

The contacting of the organosilicon compound with the support can be done in any convenient way, for example, in a slurry or in a fluidized or agitated state, the organosilicon compound being introduced as liquid, vapour or solution. It is added prior to or after the addition of the Group IIA organometallic compound. The amount of organosilicon compound used should, as already stated, be in excess of that required to react with the hydroxyl groups of the support. The amount used is preferably from 0.2 to 2.0, more preferably 0.5 to 1.5, molar equivalents with respect to the Group IIA organometallic compound.

The Group IIA organometallic compound used is preferably a hydrocarbyl derivative of magnesium or calcium or their complexes with Group IIIA metal compounds, especially aluminium compounds, such as alkyl aluminium compounds. Preferred Group IIA compounds are those of the formula $MgR_2 \cdot nAlR_3$, where R is a hydrocarbyl group and n is 0, 1 or 2. Suitable compounds of this formula are, for example, n-butylethylmagnesium, 0.5 di-n-butylmagnesium-triethylaluminium complex, and 6.1 di-n-butylmagnesium-triethylaluminium complex (Texas Alkyls' Magala 6.1E).

The amount of the Group IIA organometallic compound or complex used may be equal to, greater than, or less than the original surface hydroxyl group concentration of the support and the molar ratio of the magnesium compound or complex to the surface hydroxyl groups is preferably from 0.1 to 5.

The Group IVB and/or VB transition metal compound is preferably a halide or alkoxyhalide and the transition metal is preferably titanium, zirconium or vanadium. It is preferred to use titanium compounds of the formula $TiX_4$ or $TiX_m(OR')_{4-m}$, where X is halogen, R' is a $C_1—C_{20}$, more preferably $C_1—C_{12}$ alkyl, aryl, cycloalkyl, alkaryl, cyclopentadienyl or alkenyl group, and m is 1, 2 or 3. Suitable titanium compounds are, for example, titanium tetrachloride and n-butoxytitanium trichloride. The quantity of transition metal compound is preferably in about a one to one molar ratio with the Group IIA organometallic compound, but lower or higher ratios can be used. It is preferred that the amount of transition metal compound should be from 5 to 200 wt.% of the equivalent amount of the hydroxyl groups present in the support.

The catalysts of this invention may be prepared very simply. All that is required is that the specified components, the treated support and reactants B)(i) and B)(ii) and later (C), be introduced into a single vessel, if desired in the presence of an inert liquid medium. The preferred orders of reaction are, first, to react the treated support with the organosilicon compound B)(i), the product obtained with the Group IIA compound or complex B)(ii), and then the product of that reaction with the transition metal compound C). The second preferred order of reaction is to add the organosilicon compound B)(i) to the treated support after the reaction of the latter with the Group IIA compound or complex B)(ii), and then to react the product obtained with the transition metal compound C).

The reactions of the reactants B)(i), B)(ii) and C) with the treated support are preferably carried out in a closed vessel, under pressure or at atmospheric pressure, under an inert atmosphere, such as nitrogen, at a temperature of from 0° to 150°C and the minimal hold periods between the addition of the reactants. When an inert liquid medium is used, it may be evaporated off on completion of the reactions and heating is continued, preferably at a temperature of 70° to 150°C, and for about an hour, to obtain a completely dry, free flowing catalyst product. This product is preferably stored in a dry inert atmosphere-filled container until required for use.

Suitable cocatalysts for use with the catalysts of the invention are, as stated above, alkyl or aryl aluminium compounds. The amount of cocatalyst used is preferably such that the ratio of aluminium in the cocatalyst to transition metal in the catalyst is from 0.5 to 500:1, more preferably from 1 to 50:1. Suitable cocatalyst compounds include, for example, triethylaluminium, trioctylaluminium, triisobutylaluminium (TIBAL), diisobutylaluminium hydride, tri(2-methyl-pentyl)aluminium, diethylaluminium chloride, ethyl-aluminium dichloride, diethylaluminium ethoxide, and diethylaluminium trimethylsiloxide.

The choice of the optimum cocatalyst will depend upon the polymerization conditions used. The cocatalyst may be added to the catalyst either prior to the polymerization or simultaneously with the introduction of the catalyst into the polymerization vessel.

The catalysts of the invention may be used as dry solids, slurries, or as solutions or colloidal dispersions in liquid hydrocarbons. The catalysts may be used to polymerize or copolymerize one or more 1-olefins containing from 2 to 11, preferably 2 to 8, carbon atoms, such as ethylene, propylene, butene-1, hexene-1, 4-methyl-pentene-1, and octene-1. Preferred copolymers are those of ethylene and one or more other 1-olefins as just referred to.

The polymerization may be carried out in suspension, in the gas phase, or under solution conditions, continuously or discontinuously, at a temperature of from 20° to 300°C, preferably from 60 to 110°C, and under a pressure which is preferably from 100 to 30,000 psi (7 to 2100 kg/cm$^2$).

In order that the invention may be more fully understood, the following comparative and invention examples are given by way of illustration only.

Example 1, Table I (comparative)

A catalyst was prepared from Davison Chemical Company Grade 952 silica. The reaction were carried out in a dry, N$_2$ purged flask immersed in an ice water bath. First 3.3 g of the silica was added and the silica was stirred for thirty minutes at the low temperature. Then 20.8 ml of a (Bu$_2$Mg)$_{6.5}$Et$_3$Al solution in heptane (10 wt.%) was added by syringe (1.46 g of complex). The mixture was stirred for 30 min. then 1.13 ml (1.92 g) of titanium tetrachloride was added. After an additional 30 min. at 0°C, the flask was placed in a bath at 90°C and the solvent was evaporated under nitrogen flow.

A portion of the catalyst was tested in a pressure vessel using isobutane diluent at a total pressure of 550 psig (38.5 kg/cm$^2$) at 221°F (105°C) with a hydrogen partial pressure of 50 psig (3.5 kg/cm$^2$). TIBAL was added to give 9.2 mmoles/g of solid catalyst. The reactivity was found to be 2445 g/g cat/hr.

Example 2, Table I (invention)

A catalyst was prepared by mixing under N$_2$, 1.5 g Davison Grade 952 silica, previously dried at 300°C, with 30 cc n-heptane and 0.39 cc (20 wt.% of the silica) of hexamethyldisilazane (in-situ silanation). This mixture was heated to 90°C and stirred for one hour and then cooled. An 8.9 wt.% solution of (Bu$_2$Mg)$_{6.1}$Et$_3$Al in n-heptane, 4.46 cc, was then added. After stirring this mixture for 0.5 hr., 0.22 cc of TiCl$_4$ was added followed by stirring for an additional 0.5 hr. Removal of the n-heptane diluent with N$_2$ at 90°C resulted in a dry brown free-flowing catalyst powder.

A portion of the catalyst was tested under similar conditions to those described in Example 1, Table I, but with 8.5 mmoles/g catalyst of triisobutylaluminium as cocatalyst and at 215°F (102°C). The reactivity was found to be 3893 g/g cat/hr.

Example 3, Table I (invention)

Hexamethyldisilazane treated Davison Grade 952 silica, 1.6 g, was dried in N$_2$ for one hour at 110°C. To the dry silane treated support was added 20 cc of n-heptane and 0.14 cc additional hexamethyldisilazane (7 wt.% of the support). This mixture was stirred for 10 min. followed by the addition of 4.75 cc of 8.9 wt.% (Bu$_2$Mg)$_{6.1}$Et$_3$Al in n-heptane, stirring for an additional 10 min., and the addition of 0.22 cc titanium tetrachloride. The mixture was dried at 100°C with a N$_2$ purge to yield a black free-flowing catalyst. Reactivity under the conditions set forth in Example 2, Table I, was 2464 g/g cat/hr.

Example 4, Table I (invention)

The catalyst of this example was prepared in the same way as the catalyst of Example 2, Table I, except for the concentration of ingredients. Thus, 1.5 g of Davison Grade 952 silica, dried at 300°C in N$_2$, was mixed with 20 cc n-heptane and 0.39 cc of hexamethyldisilazane (in-situ silanation). The mixture was refluxed at 90°C for one hour and then cooled. A solution of 8.9 wt.% (Bu$_2$Mg)$_{6.1}$Et$_3$Al in n-heptane, 6.2 cc, was added and the mixture stirred 0.5 hr. Addition of 0.29 cc of titanium tetrachloride produced a dark brown product which was then freed of n-heptane by N$_2$ purge at 100°C. A free-flowing dark brown catalyst was obtained.

A portion of this catalyst was tested under low-density copolymerization conditions in isobutane diluent, with 8.5 mmoles/g catalyst of triisobutylaluminium cocatalyst, at 160°F (71°C), with a partial pressure of 50 psig (3.5 kg/cm$^2$) hydrogen, with 22 mol% butene-1 as comonomer and with ethylene fed on demand at 350 psig (24.5 kg/cm$^2$) total reaction pressure. An exceptionally high reactivity of 4797 g/g cat/hr. was obtained giving an ethylene-butene-1 copolymer with density 0.922 g/cc.

Example 5, Table I (invention)

This catalyst was similar to that of Example 3, Table I, in that excess hexamethyldisilazane was added to an already silanated silica followed by the magnesium complex and the titanium compound. However, the catalyst was prepared on a larger scale by combining under $N_2$ in 1000 cc $n$-hexane, 200 g of the hexamethyldisilazane treated Davison Grade 952 silica, dried one hour at 100°C, with 18 cc additional hexamethyldisilazane (7 wt.% of the silanated silica support), 703 cc of a 10 wt.% solution of $(Bu_2Mg)_{7.1}Et_3Al$ in $n$-heptane and with 38.6 cc titanium tetrachloride. The mixture was stirred for one hour and then dried at 110°C with $N_2$ purge for 20 hr. A black free-flowing catalyst was obtained.

As in Example 4, Table I, testing was under low-density copolymerization conditions. Again, exceptionally high reactivity was reached at 5763 g/g cat/hr. The copolymer produced had a density of 0.916 g/cc indicating good incorporation of butene-1.

Example 6, Table I (invention)

This catalyst was similar to the catalyst of Example 2, Table I, except that it was prepared on a one pound scale with Davison Grade 952 silica which had been calcined at 700°F (371°C), in a closed vessel, with no hold periods or venting between component additions and in isobutane diluent. Thus, 455 g of Davison Grade 952 silica which had been calcined at 700°F (371°C) was charged to a steel vessel under $N_2$ and the vessel sealed. About 4800 cc of isobutane was charged under pressure and the mixture agitated for 5 min. Heat was applied and the entire vessel vented to remove isobutane and all traces of oxygen from the support. The vessel was again closed and 48 cc of hexamethyldisilazane and 1400 cc isobutane was added at <150°F (66°C) with agitation followed immediately with 1180 cc of a 10.6 wt.% solution of $(Bu_2Mg)_{7.5}Et_3Al$ in $n$-hexane and 62 cc titanium tetrachloride. The remainder of the vessel was filled with 700 cc additional isobutane and the contents agitated at 195°F (91°C) for one hour. Venting with a $N_2$ purge while maintaining the temperature at about 195°F (91°C) provided a dry free-flowing brown catalyst which was transferred to a storage vessel under $N_2$.

This catalyst reached an exceptionally high productivity level of 16,500 g copolymer/g catalyst under low density particle form copolymerization conditions in isobutane at 168°F (76°C), 600 psig (42 kg/cm$^2$) total pressure, 0.22 mol% hydrogen, 4 wt.% ethylene, 13.3 mol% butene-1, and with triisobutylaluminium at 3.7 mmoles/g catalyst. The copolymer obtained had a density of 0.924 g/cc.

Invention Examples 7—10 of Table II show that narrow molecular weight distribution ethylene homopolymers are produced at various concentrations of the organosilicon compound B)(i). Example 11, Table II, shows that the embodiment of the invention where excess organosilicon compound is added to an already silanated support followed by the magnesium and titanium compounds, also gives rise to resins with narrow molecular weight distribution. Example 12, Table II, shows that much lower catalyst activity results when a catalyst similar to the catalyst described in invention Example 8 is prepared without removing the physisorbed water from the support by calcination. Examples 13 and 14 of Table II demonstrate yet another embodiment of the invention catalyst where the magnesium compound is added first to the already silanated support followed by additional organosilicon compound and the titanium compound. These catalysts showed good activity in the production of hexene-1 copolymers. Comparative Example 15, Table II, shows that the absence of excess organosilicon compound gives rise to a catalyst which produces a copolymer, under similar synthesis conditions, with much lower melt index and higher HLMI/MI ratio.

Example 7, Table II (invention)

A catalyst was prepared by mixing under $N_2$, 1.3 g of Davison Grade 952 silica which had been calcined at 400°F (204°C) with 20 cc $n$-hexane and 0.17 cc hexamethyldisilazane (0.62 mmoles/g support). After one hour, 3.86 cc of an 8.9 wt.% solution of $(Bu_2Mg)_{6.1}Et_3Al$ in $n$-heptane was added followed in 0.5 hr. by 0.18 cc of titanium tetrachloride. The mixture was dried with $N_2$ purging at 90°C to give a brown free-flowing catalyst.

A portion of the catalyst was used in ethylene polymerization at 215°F (102°C) using triisobutylaluminium as a cocatalyst and a 50 psig (3.5 kg/cm$^2$) partial pressure of hydrogen. The reactivity of the catalyst was 2156 g/g cat/hr. and the resin had a low HLMI/MI ratio of 29.6 indicating narrow molecular weight distribution.

Example 8, Table II (invention)

A catalyst similar to the above example was prepared except that the concentration of hexamethyldisilazane was increased to 1.22 mmoles/g support. Ethylene polymerization in the presence of triisobutylaluminium showed a reactivity of 2266 g/g cat/hr. A low value for the HLMI/MI ratio (24.3) again indicated a narrow molecular weight distribution.

Example 9, Table II (invention)

This catalyst is similar to Example 7, Table II, except that the concentration of hexamethyldisilazane was further increased to 1.83 mmoles/g support. Reactivity of the catalyst under similar conditions was 1002 g/g cat/hr. The HLMI/MI ratio was 26.2.

Example 10, Table II (invention)

The final catalyst of this series was prepared with 2.47 mmoles/g hexamethyldisilazane. Reactivity was 1052 g/g cat/hr. Resin HLMI/MI ratio was 21.8 again indicative of narrow molecular weight distribution.

Example 11, Table II (invention)

This catalyst is identical to that described in Example 3, Table I. Resin produced with this catalyst under homopolymer polymerization conditions has a low HLMI/MI ratio of 28.1 a value within the range of values determined on similar resins produced by the in situ silanation catalyst preparation method.

Example 12, Table II (comparative)

Much lower catalyst activity results when a catalyst similar to the catalyst described in invention Example 8, Table II, is prepared without removing the physisorbed water from the silica by calcination. Thus, 450 g of raw Davison Grade 952 silica was charged under $N_2$ to a steel vessel and sealed. All trace of air was then removed by alternatively pressurizing the vessel with $N_2$ and venting, five times. At 25°C, 130 cc of hexamethyldisilazane and 1500 cc of isobutane were charged, under pressure sufficient to liquify the isobutane, followed by agitation of the mixture for one hour. The reaction mixture was vented and then resealed. With agitation, 1180 cc of 10.6 wt.% $(Bu_2Mg)_{7.5}Et_3Al$ in n-hexane was added together with 1500 cc isobutane. After agitation for 0.25 hour, 62 cc of titanium tetrachloride and 1500 cc additional isobutane was pressurized into the vessel. This mixture was agitated for one hour at 212°F (100°C) followed by venting and drying with $N_2$ purging. The nearly white catalyst was dropped from the vessel into a $N_2$ filled dry container. With triisobutylaluminium as cocatalyst, this catalyst showed poor activity at 581 g/g cat/hr.

Example 13, Table II (invention)

Under $N_2$, 1.7 g of dry hexamethyldisilazane treated Davison Grade 952 silica was mixed with 20 cc n-hexane and a 6.4 cc solution of 9 wt.% $(Bu_2Mg)_{7.2}Et_3Al$ in n-heptane. After 0.5 hour, 0.66 cc of hexamethyldisilazane was added followed by heating of the mixture at 90°C for 0.5 hour and cooling. A solution of 0.35 cc titanium tetrachloride in 20 cc n-hexane was added followed by drying of the mixture at 90°C with $N_2$ purge. A brown-green free-flowing powdered catalyst results.

Copolymerization of ethylene with hexene-1 with this catalyst in the presence of hydrogen at 130°F (54°C), 265 psi (18.6 kg/cm$^2$) and with triisobutylaluminium as cocatalyst gave a copolymer with density 0.930 g/cc, MI 4.7, and HLMI/MI ratio of 32. Activity was 2508 g/g cat/hr.

Example 14, Table II (invention)

This catalyst was prepared as in Example 13, Table II, but with less silicon compound. Testing under similar copolymerization conditions gave a copolymer with 0.930 g/cc density, 2.9 MI, and HLMI/MI ratio of 29.4. Activity was 2519 g/g cat/hr.

Example 15, Table II (comparative)

Under $N_2$, 1.7 g of dry hexamethyldisilazane treated Davison Grade 952 silica was mixed with 20 cc n-hexane and a solution of 6.4 cc 90 wt.% $(Bu_2Mg)_{7.1}Et_3Al$ in n-heptane. This mixture was stirred 0.5 hour followed by the addition of 0.35 cc titanium tetrachloride. The product was dried at 100°C with $N_2$ purging. Testing under similar conditions gave a copolymer with 0.930 g/cc density, but with much lower MI and a much higher HLMI/MI ratio of 60.5.

Examples 16 and 17 of Table II compare, under particle form copolymerization conditions, a catalyst of this invention and a catalyst prepared from a completley silanated support, but without reaction with further organosilicon compound. Results show that the catalyst of this invention gave low-density resins with narrower molecular weight distribution (lower $R_d$) and higher notched Elmendorf tear strength (MD tear).

Example 16, Table III (comparative)

450 g of hexamethyldisilazane treated Davison Grade 952 silica was dried at 110°C for one hour and then charged under $N_2$ to a steel vessel and sealed. All traces of air were then removed by alternatively pressurizing the vessel with $N_2$ and venting, five times. With agitation, 1180 cc of 10.6 wt.% $(Bu_2Mg)_{7.5}Et_3Al$ in n-hexane was added together with 1500 cc isobutane. After mixing for one hour, 62 cc of titanium tetrachloride was added along with 1500 cc additional isobutane. This mixture was mixed for one hour at about 200°F (93°C) followed by venting and drying with $N_2$ purging. The brown product was transferred under $N_2$ to a $N_2$ filled vessel. With triisobutylaluminium as cocatalyst, this catalyst showed a productivity of 8300 g/g catalyst under particle form copolymerization conditions in isobutane diluent with hydrogen, ethylene, and butene-1 at 168°F (76°C). A copolymer with MI 0.8, $R_d$ 3.7, density 0.920 showed a notched Elmendorf machine direction tear strength of only 130 grams.

Example 17, Table III (invention)

Davison Grade 952 silica was calcined at 1100°F (593°C) for 2 hr. 450 g was charged under $N_2$ to a steel vessel along with 4800 cc of isobutane. This mixture was agitated for 5 min. followed by venting to remove the isobutane along with all traces of air. The vent was closed and 52 cc of hexamethyldisilazane was added under pressure with 1450 cc of isobutane (in situ silanation). While agitating, 1202 cc of 10 wt.% $(Bu_2Mg)_{6.5}Et_3Al$ in n-heptane followed immediately by 62 cc titanium tetrachloride was added along with 1700 cc additional isobutane. Heat was applied to 195°F (91°C) where it was held for one hour. At the end of one hour, the vessel was vented under $N_2$ purge until the product was dry. The brown free-flowing catalyst was transferred to a $N_2$ filled flask.

6

A portion of the catalyst was tested, with triisobutylaluminium as cocatalyst, under conditions similar to that described in Example 16, Table III. A copolymer with MI 0.7, lower $R_d$ 2.9, and a density of 0.919 g/cc was obtained at an exceptionally high productivity level of 12,500 g/g cat. The notched Elmendorf machine direction tear strength was more than doubled at 274 grams.

Examples 18 and 19 of Table III compare, under particle form terpolymerization conditions, a catalyst of this invention and a catalyst prepared without an organosilicon compound B)(i). Results show that the catlayst of the invention gave low density 1-butene-1-hexene terpolymer with narrower molecular weight distribution (lower $R_d$) and higher melt index.

Example 18, Table III (invention)

450 g of hexamethyldisilazane treated Davison Grade 952 silica was dried at 110°C for one hour and then charged under $N_2$ to a steel vessel and sealed. All traces of air were then removed by charging the vessel with 4800 cc of isobutane, agitating the mixture, heating and then venting with $N_2$ purge. The vent is then closed and 2402 cc of 10 wt.% $(Bu_2Mg)_{6.5}Et_3Al$ in *n*-heptane was added with 300 cc of isobutane. The mixture was agitated at ≤150°F (66°C) for one hour. Hexamethyldisilazane, 165 cc, was then added along with 300 cc isobutane. After agitating for one hour, 124 cc of titanium tetrachloride was added with 400 cc additional isobutane. While agitating, the mixture was heated to 205°F (96°C) and held at that temperature for one hour. While maintaining the temperature as close as possible at 205°F (96°C), the vessel was vented to dry the catalyst. The dark brown free flowing product was transferred under $N_2$ to a $N_2$ filled vessel. With triisobutylaluminium as cocatalyst, this catalyst under particle form terpolymerization conditions in isobutane diluent with hydrogen, ethylene, 1-butene and 1-hexene at 165°F (74°C), produced a terpolymer resin with MI 1.0, $R_d$ 3.1 and density 0.918.

Example 19, Table III (comparative)

This catalyst was prepared exactly as described in Example 16, Table III. An ethylene, 1-butene, 1-hexene terpolymer was produced under conditions described in Example 18. A terpolymer with MI 0.4, $R_d$ 5.6 and density 0.924 was produced.

TABLE I
Catalyst reactivity and productivity

| | | Mmoles/g support | | | | | |
|---|---|---|---|---|---|---|---|
| Example | Support[a] calcination T, °F (°C) | Si[g] Compound | Mg Compound | TiCl$_4$ | Reactor T, °F (°C) | Reactor[b] pressure psig (kg/cm$^2$) | Cocatalyst[c] mmoles/g catalyst |
| 1 | 392 (200) | none | 0.5 | 3.0 | 221 (105) | 550 (38.5) | 9.2 |
| 2 | 572 (300) | 1.23 | 1.37 | 1.26 | 215 (102) | 550 (38.5) | 8.5 |
| 3 | none[e] | 0.4[f] | 1.25 | 1.25 | 215 (102) | 550 (38.5) | 8.5 |
| 4 | 572 (300) | 0.7 | 1.9 | 1.8 | 160 (71) | 350 (24.5) | 8.5 |
| 5 | none[e] | 0.4[f] | 1.25 | 1.25 | 160 (71) | 350 (24.5) | 8.5 |
| 6 | 700 (371) | 0.5 | 1.25 | 1.25 | 168 (76) | 600 (42) | 3.7 |

TABLE I (contd.)

| Example | Wt.% C$_2$H$_4$ | Partial[d] pressure psig (kg/cm$^2$) H$_2$ | mol % C$_4$H$_8$-1 | Reactivity g/g cat/hr | Productivity g/g catalyst | Resin density g/cc |
|---|---|---|---|---|---|---|
| 1 | — | 50 (3.5) | — | 2445 | 2,455 | — |
| 2 | — | 50 (3.5) | — | 3893 | 3,893 | — |
| 3 | — | 50 (3.5) | — | 2464 | 2,464 | — |
| 4 | — | 50 (3.5) | 22 | 4797 | 4,797 | 0.922 |
| 5 | — | 50 (3.5) | 22 | 5763 | 5,763 | 0.916 |
| 6 | 4 | 0.22[h] | 13.3 | — | 16,500 | 0.924 |

[a]Davison Grade 952 silica
[b]Polymerization of ethylene under particle form slurry conditions in isobutane at indicated total pressure with ethylene
[c]Triisobutylaluminium
[d]Partial pressure of hydrogen in psig (kg/cm$^2$)
[e]Davison Grade 952 silica completely reacted with hexamethyldisilazane and dried at 110°C in N$_2$ for one hour
[f]7 wt.% excess hexamethyldisilazane
[g]Hexamethyldisilazane
[h]Mol %

## TABLE II
### Variations in catalyst preparation

| Example | Support[a] calcination T, °F (°C) | Mmoles/g support | | | Reactor T, °F (°C) | Reactor[b] pressure psig (kg/cm²) |
|---|---|---|---|---|---|---|
| | | Si[i] compound | Mg compound | TiCl$_4$ | | |
| 7 | 400 (204) | 0.62 | 1.36 | 1.26 | 215 (102) | 550 (38.5) |
| 8 | 400 (204) | 1.22 | 1.31 | 1.24 | 215 (102) | 550 (38.5) |
| 9 | 400 (204) | 1.83 | 1.36 | 1.24 | 215 (102) | 550 (38.5) |
| 10 | 400 (204) | 2.47 | 1.36 | 1.25 | 215 (102) | 550 (38.5) |
| 11 | none[g] | 0.4[h] | 1.25 | 1.25 | 215 (102) | 550 (38.5) |
| 12 | none[g] | 1.25 | 1.25 | 1.25 | 220 (104) | 550 (38.5) |
| 13 | none[g] | 1.9[j] | 1.9 | 1.9 | 130 (54) | 265 (18.6) |
| 14 | none[g] | 0.9[k] | 1.8 | 1.9 | 130 (54) | 265 (18.6) |
| 15 | none[g] | none | 1.9 | 1.9 | 130 (54) | 265 (18.6) |

### TABLE II (cont.)

| Example | Cocatalyst[c] mmoles/ catalyst | Wt.% C$_6$H$_{12}$[-1] | Partial[d] pressure psig (kg/cm²) H$_2$ | Reactivity g/g cat/hr | MI[e] | HLMI/MI[f] | Resin density g/cc |
|---|---|---|---|---|---|---|---|
| 7 | 8.5 | — | 50 (3.5) | 2156 | 0.5 | 29.6 | — |
| 8 | 8.5 | — | 50 (3.5) | 2266 | 0.6 | 24.3 | — |
| 9 | 8.5 | — | 50 (3.5) | 1002 | 0.5 | 26.2 | — |
| 10 | 8.5 | — | 50 (3.5) | 1052 | 2 | 21.8 | — |
| 11 | 8.5 | — | 50 (3.5) | 2464 | 1.3 | 28.7 | — |
| 12 | 5.0 | | 0.08[l] | 581 | — | — | — |
| 13 | 8.5 | 40 | 50 (3.5) | 2508 | 4.7 | 32.0 | 0.930 |
| 14 | 8.5 | 40 | 50 (3.5) | 2519 | 2.9 | 29.4 | 0.930 |
| 15 | 8.5 | 40 | 50 (3.5) | 2405 | 1.0 | 60.5 | 0.930 |

[a]Davison Grade 952 silica
[b]Polymerization of ethylene under particle form slurry conditions in isobutane at indicated total pressure with ethylene
[c]Triisobutylaluminum
[d]Partial pressure of hydrogen in psig (kg/cm²)
[e]Melt index method: ASTM D 1238—62 condition E
[f]High load melt index method: ASTM D 1238—62 condition F
[g]Davison Grade 952 silica completely treated with hexamethyldisilazane and dried at 110°C in N$_2$ for one hour
[h]7 wt.% excess hexamethyldisilazane
[i]Hexamethyldisilazane
[j]23 wt.% excess hexamethyldisilazane
[k]13 wt.% excess hexamethyldisilazane
[l]Mol %

9

TABLE III
Catalyst evaluation under particle form polymerization conditions

| Example | Support[a] calcination T, °F (°C) | Mmole/g support | | | Reactor T, °F (°C) | Reactor pressure psig (kg/cm²) |
|---|---|---|---|---|---|---|
| | | Si[b] compound | Mg[c] compound | TiCl₄ | | |
| 16 | none[i] | none | 1.25 | 1.25 | 168 (76) | 600 (42) |
| 17 | 1100 (593) | 0.55 | 1.25 | 1.25 | 169 (76) | 600 (42) |
| 18 | none[i] | 1.75 | 2.50 | 2.50 | 155 (58) | 600 (42) |
| 19 | none[i] | 1.25 | 1.25 | 1.25 | 165 (74) | 600 (42) |

TABLE III (cont.)

| Example | Cocatalyst[d] mmoles g support | Wt.% $C_2H_4$ | Mol% | | | Productivity g/g catalyst | $R_d$[e] | MI[f] | ρg | MD[h] tear g |
|---|---|---|---|---|---|---|---|---|---|---|
| | | | $H_2$ | $C_4H_6^{-1}$ | $C_6H_{12}^{-1}$ | | | | | |
| 16 | 0.9 | 4 | 0.2 | 12 | — | 8,300 | 3.7 | 0.8 | 0.920 | 130 |
| 17 | 3.7 | 3.5 | 0.3 | 14 | — | 12,500 | 2.9 | 0.7 | 0.919 | 274 |
| 18 | 2.0 | 4 | 0.2 | 1.8 | 2.4 | 130 | 3.1 | 1.0 | 0.918 | — |
| 19 | 3.0 | 4 | 0.04 | 9.8 | 2.6 | 22,000 | 5.6 | 0.4 | 0.924 | — |

[a]Davison Grade 952 silica
[b]Hexamethyldisilazane
[c]Di-n-butylmagnesium (7.5)/triethylaluminum
[d]Triisobutylaluminum
[e]Polymer Engineering and Science, Vol. II, p. 124—128 (1971)
[f]Melt index method: ASTM D 1238—62 condition E
[g]Density, g/cc
[h]Notched Elmendorf machine direction tear method: ASTM D-1922
[i]Davison Grade 952 silica completely reacted with hexamethyldisilazane and dried at 110°C in $N_2$ for one hour

## Claims

1. A method of making a solid catalyst for use with an alkyl or aryl aluminium compound cocatalyst in the polymerization and copolymerization of 1-olefins, which comprises:

A) removing surface absorbed water from a support material which is silica and/or alumina having surface hydroxyl groups by

(i) drying or calcining the support at an elevated temperature, or
(ii) reacting the support with an organosilicon compound and removing any excess of said organosilicon compound and reaction by-products.

B) reacting the treated support with

(i) an organosilicon compound which is reactive with the surface hydroxyl groups and which has the formula $(R_3Si)_2NH$, in which the R groups, which may be the same or different, are $C_1$—$C_{20}$ alkyl, aryl, alkaryl or aralkyl groups, the amount of the organosilicon compound being in excess of that required to react with the surface hydroxyl groups present in the support, and
(ii) a Group IIA organometallic compound or a complex of a Group IIA organometallic compound with a Group IIIA organometallic compound, and

C) reacting the product obtained from step B) with at least one compound of a Group IVB or Group VB transition metal.

2. A method according to claim 1, in which drying or calcining of the support is carried out at a temperature of from 200° to 1000°C.

3. A method according to claim 1, in which the organosilicon compound used to treat the support is a compound of the formula $(R_3Si)_2NH$ or $R_nSiX_{4-n}$, where n is 1, 2 or 3, X is a group which is chemically reactive with hydroxyl groups and R is hydrogen and/or a hydrocarbyl group and, when the organosilicon compound is of the formula $(R_3Si)_2NH$, any excess of the compound is removed from the support prior to reaction of the treated support with the organosilicon compound of step B) (i).

4. A method according to any of claims 1 to 3, in which steps B) and C) are carried out in the presence of an inert liquid medium.

5. A method according to claim 4, in which the inert liquid medium is a $C_3$—$C_8$ liquid alkane.

6. A method according to any of claims 1 to 5, in which the Group IIA organometallic compound is a magnesium compound.

7. A method according to claim 6, in which the magnesium compound has the formula $MgR_2 . nAlR_3$, where R is a hydrocarbyl group and n is 0, 1 or 2.

8. A method according to any of claims 1 to 7, in which the Group IIA organometallic compound or complex is used in a molar ratio with respect to the hydroxyl groups present in the support of from 0.1 to 5.

9. A method according to any of claims 1 to 8, in which the transition metal compound is a halide or alkoxyhalide.

10. A method according to any of claims 1 to 9, in which the transition metal compound is a compound of titanium, zirconium or vanadium.

11. A method according to any of claims 1 to 10, in which the transition metal compound is a titanium compound of the formula $TiX_4$ or $TiX_m (OR')_{(4-m)}$, where m is 1, 2 or 3, R' is a $C_1$—$C_{12}$ alkyl, aryl, cycloalkyl, alkaryl, cyclopentadienyl or alkenyl group, and X is halogen.

12. A method according to any of claims 1 to 11, in which the amount of transition metal compound used is from 5 to 200 wt.% of the equivalent amount of the hydroxyl groups present in the support.

13. A method according to any of claims 1 to 12, in which the treated support is reacted with the organosilicon compound B) (i), the resulting product is reacted with the Group IIA compound or complex B) (ii), and the product thereof is reacted with the transition metal compound C).

14. A method according to any of claims 1 to 12, in which the organosilicon compound B)(i) is added to the treated support before or after mixing with the Group IIA compound or complex B)(ii), and the resulting product is reacted with the transition metal compound C).

15. A method of making a polymer, which comprises polymerizing one or more 1-olefins under polymerizing conditions in the presence of a catalyst made by the process claimed in any of claims 1 to 14, and an alkyl or aryl aluminium compound cocatalyst.

16. A method according to claim 15, in which the ratio of aluminium in the cocatalyst to the transition metal present in the catalyst is from 0.5 to 500:1.

17. A method according to claim 16, in which the ratio is from 1 to 50:1.

## Patentansprüche

1. Verfahren zur Herstellung eines festen Katalysators zur Verwendung bei der Polymerisation oder Copolymerisation von 1-Olefinen zusammen mit einem Alkyl- oder Aryl-Aluminium-Cokatalysator, welches umfaßt:

A) die Entfernung von an der Oberfläche eines Trägermaterials absorbiertem Wasser, wobei der Träger aus Siliciumdioxid und/oder Aluminiumoxid mit Oberflächen-Hydroxylgruppen besteht, durch

(i) Trocknen oder Calcinieren des Trägers bei erhöhter Temperatur oder
(ii) Reaktionsbringung des Trägers mit einer Organosiliciumverbindung und Entfernung eines Überschusses der Organosiliciumverbindung sowie der Nebenprodukte,

B) die Weiterbehandlung des Trägers mit

(i) einer Organosiliciumverbindung, welche gegenüber den Oberflächenhydroxylgruppen reaktiv ist und der Formel $(R_3Si)_2NH$ entspricht, in welcher die R-Gruppen gleich oder verschieden, $C_1$ bis $C_{20}$-Alkyl-, Aryl-, Alkaryl- oder Aralkyl-Gruppen sind, in einer solchen Menge, daß die Organosiliciumverbindung in Bezug auf die Oberflächenhydroxylgruppen im Überschuß eingesetzt wird, und
(ii) einer Organometallverbindung eines Metalls der Gruppe IIA des Periodensystems oder einem Komplex aus einer Organometallverbindung eines Metalls der Gruppe IIA des Periodensystems mit einer Organometallverbindung eines Metalls der Gruppe IIIA der Periodensystems und

C) die weitere Umsetzung des in der Stufe B) erhaltenen Produkts mit wenigstens einer Verbindung eines Übergangsmetalls der Gruppe IVB oder VB des Periodensystems.

2. Verfahren nach Anspruch 1, wobei das Trocknen oder Calcinieren des Trägers bei einer Temperatur zwischen 200 bis 1000°C durchgeführt wird.

3. Verfahren nach Anspruch 1, wobei die zur Behandlung des Trägers verwendete

## 0 123 510

Organosiliciumverbindung eine solche der Formeln $(R_3Si)_2NH$ oder $R_nSiX_{4-m}$ ist, worin n 1, 2 oder 3 bedeutet, X eine mit den Oberflächenhydroxylgruppen reaktionsfähige Gruppe darstellt und R Wasserstoff und/oder einer Hydrocarbylgruppe entspricht, sowie im Falle des Vorliegens einer Organosilicium-verbindung der Formel $(R_3Si)_2NH$ jeder Überschuß dieser Verbindung von Träger entfernt wird, bevor die Umsetzung des behandelten Trägers mit der Organosiliciumverbindung der Stufe B)(i) erfolgt.

4. Verfahren nach einem jeden der Ansprüche 1 bis 3, wobei die Stufen B) und C) ausgeführt werden in Gegenwart eines inerten flüssigen Mediums.

5. Verfahren nach Anspruch 4, wobei das inerte flüssige Medium ein flüssiges $C_3$ bis $C_8$-Alkan ist.

6. Verfahren nach einem jeden der Ansprüche 1 bis 5, wobei die organometallische Verbindung eines Metalls der Gruppe IIA der Periodensystems eine Magnesiumverbindung ist.

7. Verfahren nach Anspruch 6, wobei die Magnesiumverbindung der Formel $MgR_2 . nAlR_3$ entspricht, in der R eine Hydrocarbylgruppe bedeutet und n 0, 1 oder 2 entspricht.

8. Verfahren nach einem jeden der Ansprüche 1 bis 7, wobei die organometallische Metallverbindung eines Metalls der Gruppe IIA oder die Komplexverbindung eingesetzt wird in einem Molverhältnis zu den Oberflächengruppen des Trägers von 0,1 bis 5.

9. Verfahren nach einem jeden der Ansprüche 1 bis 8, wobei die Übergangsmetallverbindung ein Halogenid oder ein Alkoxyhalogenid ist.

10. Verfahren nach einem jeden der Ansprüche 1 bis 9, wobei die Übergangsmetallverbindung eine Verbindung des Titans, Zirkons oder Vanadins ist.

11. Verfahren nach einem jeden der Ansprüche 1 bis 10, wobei die Übergangsmetallverbindung eine Titanverbindung mit der Formel $TiX_4$ oder $TiX_m(OR')_{4-m}$ ist, in der m den Wert von 1, 2 oder 3 hat, R' eine $C_1$ bis $C_{12}$-Alkyl-, Aryl-, Cycloalkyl-, Alkaryl-, Cyclopentadienyl- oder Alkenyl-Gruppe darstellt und X ein Halogen ist.

12. Verfahren nach einem jeden der Ansprüche 1 bis 11, wobei die Menge der verwendeten Übergangsmetallverbindung 5 bis 200 Gew.-% der äquivalenten Menge der Hydroxylgruppen der Trägers ist.

13. Verfahren nach einem jeden der Ansprüche 1 bis 12, wobei der behandelte Träger mit der Organosiliciumverbindung entsprechend B)(i) umgesetzt wird, das erhaltene Produkt weiter umgesetzt wird mit der Verbindung oder dem Komplex des Metalls der Gruppe IIA des Periodensystems gemäß B)(ii) sowie das so gewonnene Produkt mit der Übergangsmetallverbindung gemäß C) zur Reaktion gebracht wird.

14. Verfahren nach einem jeden der Ansprüche 1 bis 12, wobei die Organosiliciumverbindung entsprechend B)(i) zu dem behandelten Träger vor oder nach dem Vermischen mit der Verbindung oder dem Komplex des Metalls der Gruppe IIA des Periodensystems zugesetzt wird und das erhaltene Reaktionsprodukt mit der Übergangsmetallverbindung gemäß C) weiter umgesetzt wird.

15. Verfahren zur Herstellung von Polymeren, welches das Polymerisieren eines oder mehrerer 1-Olefine unter Polymerisationsbedingungen in Gegenwart eines Katalysators nach einem der Ansprüche 1 bis 14 sowie eines Alkyl- oder Aryl-Aluminium-Cokatalysators umfaßt.

16. Verfahren nach Anspruch 15, wobei das Verhältnis von Aluminium in dem Cokatalysator zu dem Übergangsmetall in dem Katalysator zwischen 0,5 und 500:1 liegt.

17. Verfahren nach Anspruch 16, wobei das Verhältnis zwischen 1 bis 50:1 liegt.

**Revendications**

1. Un procédé de préparation d'un catalyseur solide destiné à l'emploi, avec un cocatalyseur à base d'un composé d'alkyl ou d'aryl aluminium, pour la polymérisation et la copolymérisation de l'oléfines, qui consiste

A) à éliminer l'eau absorbée en surface d'une matière-support qui est une silice et/ou une alumine dotée des groupes hydroxyles en surface

(i) par séchage ou calcination du support à température élevée ou
(ii) par réaction du support avec un composé organosilicique et élimination de l'excès dudit composé organosilicique et des produits secondaires de la réaction,

B) à faire réagir le support traité avec

(i) un composé organosilicique qui est réactif vis à vis des groupes hydroxyles en surface et possède la formule $(R_3Si)_2NH$ dans laquelle les groupes R, qui peuvent être identiques ou différents, sont des groupes alkyles en $C_1$ à $C_{20}$, aryles, alcaryles ou aralkyles, la quantité du composé organosilicique étant en excès par rapport à celle nécessaire à la réaction avec les groupes hydroxyles en surface présente dans le support et
(ii) avec un composé organométallique du groupe IIA ou un complexe d'un composé organométallique du groupe IIA avec un composé organométallique du groupe IIIA et

C) à faire réagir le produit obtenu à partir de l'étape B) avec au moins un composé d'un métal de transition du groupe IVB ou du groupe VB.

12

2. Procédé selon la revendication 1, dans lequel le séchage ou la calcination du support à lieu à une température de 200° à 1000°C.

3. Procédé selon la revendication 1, dans lequel le composé organosilicique servant au traitement du support est un composé de formule $(R_3Si)_2NH$ ou $R_nSiX_{4-n}$ où n est 1, 2 ou 3, X est un groupe qui est chimiquement réactif vis à vis des groupes hydroxyles et R est l'hydrogène et/ou un groupe hydrocarbyle et, lorsque le composé organosilicique répond à la formule $(R_3Si)_2NH$, tout excès du composé est éliminé du support avant la réaction du support traité avec le composé organosilicique de l'étape B)(i).

4. Procédé selon l'une des revendications 1 à 3, dans lequel les étapes B) et C) sont conduites en présence d'un milieu liquide inerte.

5. Procédé selon la revendication 4, dans lequel le milieu liquide inerte est un alcane liquide en $C_3$ à $C_8$.

6. Procédé selon l'une quelconque des revendications 1 à 5, dans lequel le composé organométallique du groupe IIA est un composé de magnésium.

7. Procédé selon la revendication 6, dans lequel le composé de magnésium répond à la formule $MgR_2 \cdot nAlR_3$ dans laquelle R est un groupe hydrocarbyle et n est 0, 1 ou 2.

8. Procédé selon l'une quelconque des revendications 1 à 7, dans lequel le composé organométallique ou le complexe du groupe IIA est employé dans un rapport molaire de 0,1 à 5 par rapport aux groupes hydroxyles présents dans le support.

9. Procédé selon l'une quelconque des revendications 1 à 8, dans lequel le composé de métal de transition est un halogénure ou un alcoxyhalogénure.

10. Procédé selon l'une quelconque des revendications 1 à 9, dans lequel le composé de métal de transition est un composé de titane, de zirconium ou de vanadium.

11. Procédé selon l'une quelconque des revendications de 1 à 10, dans lequel le composé de métal de transition est un composé de titane de formule $TiX_4$ ou $TiX_m(OR')_{(4-m)}$ où m est 1, 2 ou 3, R' est un groupe alkyle en $C_1$ à $C_{12}$, un groupe aryle, cycloalkyle, alcaryle, cyclopentadiényle ou alcényle et X est un halogène.

12. Procédé selon l'une quelconque des revendications 1 à 10, dans lequel la quantité du composé de métal de transition employée représente 5 à 200% en poids de la quantité équivalente des groupes hydroxyles présents dans le support.

13. Procédé selon l'une quelconque des revendications 1 à 12, dans lequel le support traité est mis à réagir avec le composé organosilicique B)(i), le produit résultant est mis à réagir avec le composé du groupe IIA ou le complexe B)(ii) et le produit de celui-ci est mis à réagir avec le composé de métal de transition C).

14. Procédé selon l'une quelconque des revendications 1 à 12, dans lequel le composé organosilicique B)(i) est ajouté au support traité avant ou après mélange avec le composé du groupe IIA ou le complexe B)(ii) et le produit résultant est mis à réagir avec le composé de métal de transition C).

15. Un procédé de préparation d'un polymère qui consiste à polymériser une ou plusieurs 1-oléfines dans des conditions de polymérisation en présence d'un catalyseur obtenu par le procédé selon l'une quelconque des revendications 1 à 14, et d'un cocatalyseur à base d'un composé d'alkyl ou d'arylaluminium.

16. Procédé selon la revendication 15, dans lequel le rapport d'aluminium dans le cocatalyseur au métal de transition présent dans le catalyseur est de 0,5 à 500:1.

17. Procédé selon la revendication 16, dans lequel le rapport est de 1 à 50:1.

13